# EUROPEAN PATENT APPLICATION

(11) **EP 2 431 776 A1**
(43) Date of publication of application: **21.03.2012**
(21) Application number: 10176749.9
(22) Date of filing: 15.09.2010
(51) Int. Cl.: G02B 6/38, G02B 6/44

(54) **Insulation Flexible Metal Sleeve Optic-Fiber Patch Cord**

(71) Applicant: Chen, Ruoyu, Futian District, Shenzhen Guangdong (CN)
(72) Inventor: Chen, Ruoyu, Futian District, Shenzhen Guangdong (CN)
(74) Representative: Horak, Michael

(57) **Abstract**

An insulation flexible metal sleeve optic-fiber patch cord includes a protection cap fit over a ferrule that ferrule is inserted in a flange. The flange is inserted into a front insulation sleeve, which is mounted to a rear insulation sleeve that receives an optic fiber therein. An inner sleeve encompasses the front insulation sleeve, the flange, and the rear insulation sleeve. A spring is located between a front cover cap and the inner sleeve and encompasses the flange. A front sleeve is fit over a front end of the inner sleeve and is surrounded by the front cover cap. The optic fiber, which is surrounded by a shielding, is inserted sequentially through the rear insulation sleeve, the front insulation sleeve, and the flange to connect to the ferrule.

## Description

### (a) Technical Field of the Invention

The present invention generally relates to an optic-fiber patch cord that is an optic fiber patch cord widely applicable to connections employed in various optic fiber devices and optic fiber communication systems for transmission of signals including data, voice, and image, and particularly for outdoor applications, household applications, office applications, and optic fiber based temperature detection systems.

### (b) Description of the Prior Art

A commonly used and known structure of optic cable comprises an optic fiber unit with a tension resistance member directly attached to an outside surface thereof and an insulation sleeve is provided for protection. A disadvantage is that the conventional optic cable is of insufficient capability standing test pressure, which often leads to constraints to the applications of optic cable by environmental factors, making it impossible to lay the cable in an outdoor environment, incapable of resisting biting of mice damages caused by other animals, and incapable of meeting the needs of a complicated condition, and incapable of standing treading of individuals and depressing of vehicles. To resolve such issues, the applicant disclosed in Chinese Patent Publication No. 201017071 an optic fiber that comprises an optic fiber protection shell and a flexible metal sleeve optic-fiber patch cord that is composed of a plug connector, wherein an optic fiber that is inserted from an end member of optic fiber ferrule into the optic fiber ferrule is surrounded a layer of flexible metal covering tube that extends to and connects with the end member of the optic fiber ferrule and is coupled to an axial spring mounted to an end to thereby form a gap-free completely enclosed arrangement with respect to the plug connector mounted to the end. Such a technical arrangement provides a flexible metal covering tube that completely cover the optic fiber to eliminate the gap that is left between the end member of the optic ferrule and the flexible metal covering tube of the conventional device, so as to resolve increased loss caused by slight bending of an optic fiber occurring in the processes of manufacturing, installation, and use of a patch cord. However, the insulation property at the connection is still poor.

### SUMMARY OF THE INVENTION

The present invention aims to provide an insulation flexible metal sleeve optic-fiber patch cord, which resolves increased loss caused by bending of an optic fiber occurring in the processes of manufacturing, installation, and use and provides improved insulation property

To achieve the above objective, the present invention provide a technical solution, which comprises an insulation flexible metal sleeve optic-fiber patch cord, comprising a ferrule, a flange connected to the ferrule, a spring encompassing the flange, a shielding surrounding an optic fiber, a cup, a crimp ring, a boot, an inner sleeve, a front sleeve, a front cover cap, and a fiber jacket. The optic fiber surrounded by the shielding is inserted through the flange to connect to the ferrule. The inner sleeve receives therein the front insulation sleeve and the rear insulation sleeve. The front insulation sleeve surrounds an end of the shielding and the flange. The rear insulation sleeve is fit over the shielding and an end of the rear insulation sleeve engages an end of the front insulation sleeve.

The process of assembling is as follows. Firstly, the front insulation sleeve is force-fit to the flange, and then the rear insulation sleeve is fit over the shielded optic fiber. The shielded optic fiber is then inserted into the front insulation sleeve. Meanwhile, the optic fiber located inside the shielding is inserted into the ferrule. Afterwards, baking is performed to cure adhesives that are filled in the cord beforehand in order to realize protection and insulation of the whole optic fiber patch cord connector.

Compared to the existing technology, the present invention offers the following advantage:
A front insulation sleeve and a rear insulation sleeve are additionally arranged inside the inner sleeve to provide protection and insulation of the whole optic fiber patch cord connector.

The foregoing objectives and summary provide only a brief introduction to the present invention. To fully appreciate these and other objects of the present invention as well as the invention itself, all of which will become apparent to those skilled in the art, the following detailed description of the invention and the claims should be read in conjunction with the accompanying drawings. Throughout the specification and drawings identical reference numerals refer to identical or similar parts.

Many other advantages and features of the present invention will become manifest to those versed in the art upon making reference to the detailed description and the accompanying sheets of drawings in which a preferred structural embodiment incorporating the principles of the present invention is shown by way of illustrative example.

### BRIEF DESCRIPTION OF THE DRAWINGS

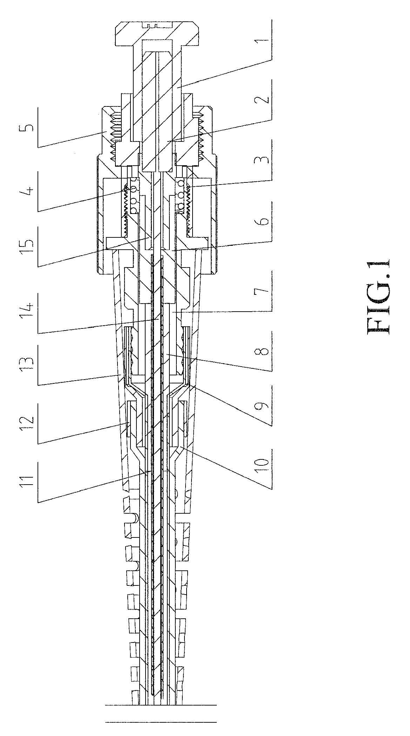

FIG 1 is a cross-sectional view of the present invention.

### DETAILED DESCRIPTION OF THE PREFERRED EMBODIMENTS

The following descriptions are exemplary embodiments only, and are not intended to limit the scope, applicability or configuration of the invention in any way Rather, the following description provides a convenient illustration for implementing exemplary embodiments of the invention. Various changes to the described embodiments may be made in the function and arrangement of the elements described without departing from the scope of the invention as set forth in the appended claims.

A detailed description of the present invention will be given as follows, with reference to the attached drawings.

As shown in FIG 1, the present invention provides an insulation flexible metal sleeve optic-fiber patch cord, which comprises a protection cap 1, a ferrule 2, a flange 15, a spring 4, a shielding 11 that surrounds an optic fiber 14, a cup 9, a crimp ring 12, a boot 13, an inner sleeve 7, a front sleeve 3, a front cover cap 5, a fiber jacket 10, a front insulation sleeve 6, and a rear insulation sleeve 8. The protection cap 1 is fit over the ferrule 2 for protecting the ferrule 2. The ferrule 2 is inserted in the flange 15. The flange 15 is inserted into the front insulation sleeve 6. The front insulation sleeve 6 is mounted to the rear insulation sleeve 8 that receives the optic fiber therein. The inner sleeve 7 is set to encompass outside the front insulation sleeve 6, the flange 15, and the rear insulation sleeve 8. The spring 4 is located between the front cover cap 5 and the inner sleeve 7 and encompasses the flange 15. The front sleeve 3 is fit over a front end of the inner sleeve 7. The front cover cap 5 surrounds the front sleeve 3. The optic fiber 14 that is surrounded by the shielding 11 is inserted sequentially through the rear insulation sleeve 8, the front insulation sleeve 6, and the flange 15 to connect to the ferrule 2.

The metal shielding sleeve 6 functions to receive the optic fiber therein for protection purposes and the sleeve 6 is fit over the flange 15 to allow the optic fiber 14 of an optic cable to be located inside the ferrule 2 with the shielding 11 received in the flange 15, the front insulation sleeve 6, and the rear insulation sleeve 8, so as to form a completely surrounding protection arrangement. This resolves the problem of optic fiber exposure that leads to bending of fiber and thus increased loss, and provides excellent insulation characteristics.

Further, the ferrule the flange 15 can be completely made of metal or a combination of metal and insulation material. For a flange 16 that is completely made of metal, based on the characteristics of various models of connector, a SC device, which is totally made of plastic, shows inherent insulation property For an FC device using metal flange, the connector itself forms a conductor, so that a flange formed of a combination of metal and insulation material must be employed to ensure the insulation property.

The patch cord is assembled in the following way Firstly, the front insulation sleeve 6 is force-fit to the flange 15, and then the rear insulation sleeve 8 is fit over the shielded optic fiber. The shielded optic fiber is then inserted into the front insulation sleeve 6. Meanwhile, the optic fiber 14 located inside the shielding 11 is inserted into the ferrule 2. Afterwards, baking is performed to cure adhesives that are filled in the cord beforehand in order to realize protection and insulation of the whole optic fiber patch cord connector.

It will be understood that each of the elements described above, or two or more together may also find a useful application in other types of methods differing from the type described above.

While certain novel features of this invention have been shown and described and are pointed out in the annexed claim, it is not intended to be limited to the details above, since it will be understood that various omissions, modifications, substitutions and changes in the forms and details of the device illustrated and in its operation can be made by those skilled in the art without departing in any way from the spirit of the present invention.

## Claims

1. An insulation flexible metal sleeve optic-fiber patch cord, comprising a protection cap, a ferrule, a flange, a spring, a shielding surrounding an optic fiber, a cup, a crimp ring, a boot, an inner sleeve, a front sleeve, a front cover cap, a fiber jacket, a front insulation sleeve, and a rear insulation sleeve, wherein the protection cap is fit over the ferrule and the ferrule is inserted in the flange; the flange is inserted into the front insulation sleeve; the front insulation sleeve is mounted to the rear insulation sleeve that receives the optic fiber therein; the inner sleeve is set to encompass outside the front insulation sleeve, the flange, and the rear insulation sleeve; the spring is located between the front cover cap and the inner sleeve and encompasses the flange; the front sleeve is fit over a front end of the inner sleeve; the front cover cap surrounds the front sleeve; the optic fiber surrounded by the shielding is inserted sequentially through the rear insulation sleeve, the front insulation sleeve, and the flange to connect to the ferrule;
wherein the metal shielding sleeve functions to receive the optic fiber therein, and the sleeve is fit over the flange to allow the optic fiber of an optic cable to be located inside the ferrule with the shielding received in the flange, the front insulation sleeve, and the rear insulation sleeve, so as to form a completely surrounding protection arrangement.

2. The insulation flexible metal sleeve optic-fiber patch cord according to claim 1, wherein the front insulation sleeve receives adhesive filled therein.
